# EUROPEAN PATENT APPLICATION

(11) **EP 1 729 543 A1**
(43) Date of publication of application: **06.12.2006**
(21) Application number: 06114552.0
(22) Date of filing: 25.05.2006
(51) Int. Cl.: H05B 33/08, G09G 3/34

(54) **Display apparatus with backlight driver control**

(30) Priority: 31.05.2005 KR 20050046139
(71) Applicant: Samsung Electronics Co., Ltd, Suwon-si, Gyeonggi-do 442-742 (KR)
(72) Inventor: Kim, Kwang-youn Jugong Apt. 306-1002, Gyeonggi-do (KR)
(74) Representative: Read, Matthew Charles

(57) **Abstract**

A display apparatus is provided including a light emitting diode (LED) backlight (20), a backlight driver (30) to control the drive of the LED backlight, a power supplier to supply driving power to the backlight driver, a detector (40) to detect a voltage of the driving power supplied to the backlight driver and determine whether the voltage of the driving power is lower than a predetermined voltage, and a controller (50) to control at least one of the backlight driver and the power supplier to disable the drive of the LED backlight if it is determined that the voltage of the driving power is lower than the predetermined voltage based on the detection of the detector. Thus, embodiments of the present invention provide a display apparatus which disables the drive of an LED backlight to prevent over-current of a backlight driver from being generated if driving power supplied to a backlight driver is lower than a predetermined driving power.

## Description

The present invention relates to a display apparatus having a backlight such as a light emitting diode (LED).

Display apparatuses have increasingly employed one or more light emitting diodes as a backlight to improve colour realization, instead of employing a conventional cold cathode fluorescent lamp (CCFL).

A display apparatus having backlight that uses an LED element improves the colour realization, due in part to the LED backlight. However, as the display apparatus generates a large amount of heat due to the LED element, care should be taken to prevent damage or deterioration of the LED backlight.

A conventional display apparatus having such an LED backlight will now be described. The conventional display apparatus comprises a backlight driver to drive the LED backlight. If driving power, for example, 160V, is supplied to the backlight driver to drive the LED backlight, the backlight driver outputs a control signal to the LED backlight by using the supplied driving power. The display apparatus may, however, supply a driving power at a lower voltage than normal (for example, (160-x)V), to the backlight driver, due to operation changes or errors. As the backlight driver is characterized by generating a constant current from the driving power to control the drive of the LED backlight, the backlight driver draws more current from the driving power in proportion to the lowered voltage of the supplied driving power. Thus, the LED element of the LED backlight generates more heat as more current is drawn by the backlight driver to compensate for the reduced voltage to maintain a constant current output.

If the constant current generated by the backlight driver through the driving power reaches a predetermined level, for example, 4A, an over-current protection circuit of a switching mode power supply (SMPS) in the display apparatus operates, thereby turning off the power of the display apparatus.

That is, if the driving power voltage, which is lower than the normal driving power voltage, is supplied to the backlight driver, and the backlight driver generates an over-current, the entire power supply of the display apparatus is turned off to prevent the LED backlight from being damaged or deteriorating.

As the conventional display apparatus turns off the entire power supply if the backlight driver generates the over-current, a user is required to reboot the display apparatus to use it. Also, a user may become confused while using the display apparatus as he/she does not recognize why the power of the display has been turned off.

Accordingly, a need exists for a system and method which efficiently disables the drive of an LED backlight if driving power voltage supplied to a backlight driver is lower than a predetermined voltage to prevent a backlight driver from generating an over-current condition.

Accordingly, it is an aspect of exemplary embodiments of the present invention to substantially solve the above and other problems, and to provide a display apparatus which disables the drive of an LED backlight to prevent over-current of a backlight driver from being generated if the driving power supplied to a backlight driver is lower than a predetermined driving power.

Broadly stated, the invention provides a display apparatus as claimed in claim 1. Further features and advantages of the invention will be evident from claim 2 *et seq.*

Also, it is another aspect of embodiments of the present invention to provide a display apparatus which informs a user of an enable/disable operation of the LED backlight drive to prevent a user from becoming confused.

Additional aspects and/or advantages of embodiments of the present invention will be set forth in part in the description which follows and, in part, will be obvious from the description, or may be learned by practice of embodiments of the present invention.

The foregoing and/or other aspects of embodiments of the present invention are also achieved by providing a display apparatus comprising a light emitting diode (LED) backlight, a backlight driver to drive the LED backlight, a power supplier to supply driving power to the backlight driver, a detector to detect a voltage of the driving power supplied to the backlight driver and determine whether the voltage of the driving power is lower than a predetermined voltage, and a controller to control at least one of the backlight driver and the power supplier to disable the drive of the LED backlight if it is determined that the voltage of the driving power is lower than the predetermined voltage based on the detection of the detector.

According to an aspect of embodiments of the present invention, the controller comprises a field programmable gate array (FPGA) to control the backlight driver to disable the drive of the LED backlight if it is determined that the voltage of the driving power is lower than the predetermined voltage based on the detection of the detector.

According to an aspect of embodiments of the present invention, the backlight driver disables the drive of the LED backlight according to a disable control of the FPGA.

According to another aspect of embodiments of the present invention, the controller comprises a microcomputer to control the power supplier to cut off the driving power supplied to the backlight driver to disable the drive of the LED backlight if it is determined that the voltage of the driving power is lower than the predetermined voltage based on the detection of the detector.

According to another aspect of embodiments of the present invention, the microcomputer controls the power supplier to cut off the driving power supplied to the backlight driver to disable the drive of the LED backlight if the determination that the voltage of the driving power is lower than the predetermined voltage, is generated for a predetermined number of periods of time, with the predetermined number of times based on the detection of the detector.

According to another aspect of embodiments of the present invention, the microcomputer controls the power supplier to change a driving mode of the display apparatus into a standby mode to disable the drive of the LED backlight.

According to another aspect of embodiments of the present invention, the detector comprises a comparator to detect the voltage of the driving power supplied to the backlight driver, compare the detected voltage with the predetermined reference voltage, and output a high signal to the controller if the voltage of the driving power is lower than the reference voltage.

According to another aspect of embodiments of the present invention, the display apparatus further comprises an informer to inform a user of an over-temperature of the LED backlight, wherein the controller controls the informer to inform the user of the over-temperature of the LED backlight if and/or when disabling the drive of the LED backlight based on the detection of the detector.

According to another aspect of embodiments of the present invention, the controller controls the informer to inform a user of a normal temperature of the LED backlight if it is determined that the voltage of the driving power is higher than the predetermined voltage based on the detection of the detector while in a state wherein the drive of the LED backlight is disabled.

According to another aspect of embodiments of the present invention, the informer comprises at least one of an on screen display (OSD) generator to generate an OSD over-temperature message and an OSD normal temperature message, and a melody generator to generate an over-temperature melody and a normal temperature melody to inform a user of the over-temperature and normal temperature of the LED backlight.

The above and/or other aspects and advantages of embodiments of the present invention will become apparent and more readily appreciated from the following description, taken in conjunction with the accompanying drawings, of which:
FIG. 1 is a control block diagram of a display apparatus according to a first exemplary embodiment of the present invention;
FIG. 2 is a control block diagram of a display apparatus according to a second exemplary embodiment of the present invention;
FIG. 3 is a control block diagram of a display apparatus according to a third exemplary embodiment of the present invention;
FIG. 4 is a control flowchart of the display apparatus in FIG. 2 according to the second exemplary embodiment of the present invention; and
FIG. 5 is a control flowchart of the display apparatus in FIG. 3 according to the third exemplary embodiment of the present invention.

Throughout the drawings, like reference numerals will be understood to refer to like parts, components and structures.

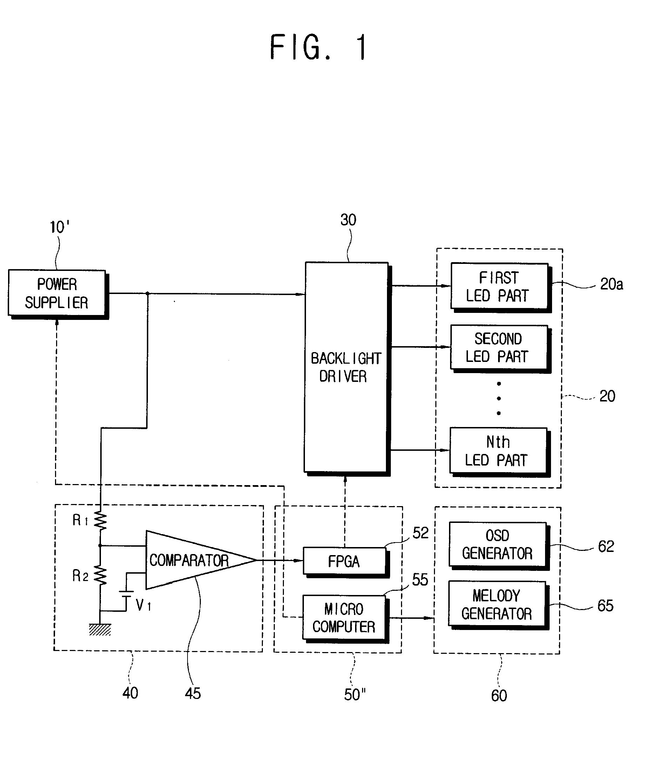

FIG. 1 is a control block diagram of a display apparatus according to a first exemplary embodiment of the present invention. As shown therein, the display apparatus according to the first embodiment of the present invention comprises an LED backlight 20, a backlight driver 30 to control the drive of the LED backlight 20, a power supplier 10' to supply driving power, for example, 160V, to the backlight driver 30, a detector 40 to detect a voltage of the driving power supplied to the backlight driver 30 and determine whether the voltage of the driving power is lower than a predetermined voltage, and a controller 50" to control at least one of the backlight driver 30 and the power supplier 10' to disable the drive of the LED backlight 20 if it is determined that the voltage of the driving power is lower than the predetermined voltage based on the detection of the detector 40.

The LED backlight 20 may comprise a plurality of LED parts 20a, for example, a first LED part, to an Nth LED part, which comprise a plurality of LED elements (not all shown) respectively.

The power supplier 10' respectively supplies the driving power to various circuits (not shown) to perform functions in the display apparatus, as well as supplies the driving power, for example, 160V, to the backlight driver 30.

The backlight driver 30 generates a constant current from the driving power supplied from the power supplier 10', and applies the constant current to the LED backlight 20 to control the drive of the LED backlight 20. If the backlight driver 30 receives a disable signal from the controller 50", the backlight driver 30 disables the current applied to the LED backlight 20 to make the current supplied to the LED backlight 20 become substantially "0", thereby disabling the drive of the LED backlight 20. If the backlight driver 30 receives an enable signal from the controller 50", the backlight driver 30 may control the drive of the LED backlight 20 to drive it normally.

The detector 40 detects the voltage of the driving power supplied to the backlight driver 30, and determines whether the voltage of the driving power is lower than a predetermined voltage. The detector 40 comprises a voltage divider, or resistance division circuit including resistors R1 and R2 to provide a predetermined fraction of the driving power voltage for comparison by using the driving power, for example, 160V, supplied to the backlight driver 30, and a comparator 45 to compare a voltage of the predetermined comparison driving power detected through the resistance division circuit of R1 and R2 with a predetermined reference voltage V1, and output a high signal if the voltage of the predetermined comparison driving power is lower than the reference voltage V1.

The controller 50" comprises a field programmable gate array (FPGA) 52 as a controller to control the backlight driver 30 to disable the drive of the LED backlight 20 by outputting the disable signal to the backlight driver 30 if it is determined that the controller 50" receives the high signal from the comparator 45, that is, if the voltage of the predetermined comparison driving power is lower than the reference voltage V1 on the basis of the detection of the detector 40.

The FPGA 52 controls the backlight driver 30 to enable the drive of the LED backlight 20 by outputting the enable signal to the backlight driver 30 if it is determined that the voltage of the predetermined comparison driving power is larger than the reference voltage V1, that is, if a low signal is input from the comparator 45 based on the detection of the detector 40 while in a state wherein the drive of the LED backlight 20 is disabled.

The backlight driver 30 according to embodiments of the present invention disables the drive of the LED backlight 20 preferably only if the driving power supplied to the backlight driver 30 is lowered below a predetermined allowable value of the normal driving power, for example, 160V, instead of turning off the entire power of the display apparatus as done conventionally. In yet other embodiments of the present invention, the backlight driver 30 disables the drive of the LED backlight 20 if the driving power supplied to the backlight driver 30 is lowered below and/or increased above a predetermined range of allowable values of the normal driving power, for example, (160±n)V, or is lowered below and/or increased above an allowable value or range of values of the normal driving power for a period of elapsed time.

The controller 50" comprises a microcomputer 55 to output a PWM signal to the power supplier 10' to control the power supplier 10' and cut off the driving power supplied to the backlight driver 30 and disable the drive of the LED backlight 20 if the high signal is input from the comparator 45 based on the detection of the detector 40.

Here, the microcomputer 55 outputs the PWM signal to the power supplier 10' to control the power supplier 10' and change a driving mode of the display apparatus into a standby mode, and cuts off the driving power supplied to the backlight driver 30 if the high signal is input from the comparator 45 based on the detection of the detector 40.

If the low signal is input from the comparator 45 while in a state wherein the drive of the LED backlight 20 is disabled by cutting off the driving power supplied to the backlight driver 30 or controlling the power supplier 10' to change the driving mode of the display apparatus into the standby mode, the microcomputer 55 controls the power supplier 10' in a pulse wide modulation (PWM) method to then supply the driving power to the backlight driver 30 or change the driving mode of the display apparatus into the normal mode, thereby enabling the drive of the LED backlight 20.

If the driving power supplied to the backlight driver 30 is lowered below the predetermined allowable value of the normal driving power, the backlight driver 30 is preferably disabled through an operation of the FPGA 52 to make the current applied to the LED backlight 20 become substantially "0". Also, the drive of the LED backlight 20 may be disabled by changing the driving mode of the display apparatus into the standby mode or by cutting off the power supplied to the backlight driver 30.

The display apparatus according to the first embodiment of the present invention further comprises an informer 60 to inform a user of the over-temperature of the LED backlight 20. The controller 50" may control the informer 60 to inform the user of the over-temperature of the LED backlight 20 if and/or when disabling the drive of the LED backlight 20 based on the detection of the detector 40.

The informer 60 may comprise at least one of an on screen display (OSD) generator 62 to generate an OSD over-temperature message and an OSD normal temperature message to inform the user of the over-temperature and normal temperature of the LED backlight 20, and a melody generator 65 to generate an over-temperature melody and a normal temperature melody to inform the user of the over-temperature and the normal temperature of the LED backlight 20.

The microcomputer 55 may further control at least one of the OSD generator 62 and the melody generator 65 to inform the user of the over-temperature of the LED backlight 20 if and/or when disabling the drive of the LED backlight 20. Also, the microcomputer 55 may control at least one of the OSD generator 62 and the melody generator 65 to inform the user of the normal temperature of the LED backlight 20 if it is determined that the voltage of the predetermined comparison driving power is higher than the reference voltage V1 based on the detection of the detector 40 while in a state wherein the drive of the LED backlight 20 is disabled.

The display apparatus according to embodiments of the present invention informs a user that the LED backlight 20 is in the over-temperature state as the driving power supplied to the backlight driver 30 is lowered from the normal driving power to a point below the predetermined allowable value, so that a user may not become confused and can take appropriate action. Also, the display apparatus according to embodiments of the present invention informs a user that the LED backlight 20 is in the normal temperature state as the normal driving power is supplied to the backlight driver 30 while in a state wherein the drive of the LED backlight 20 is disabled so that a user may not become confused and can take appropriate action.

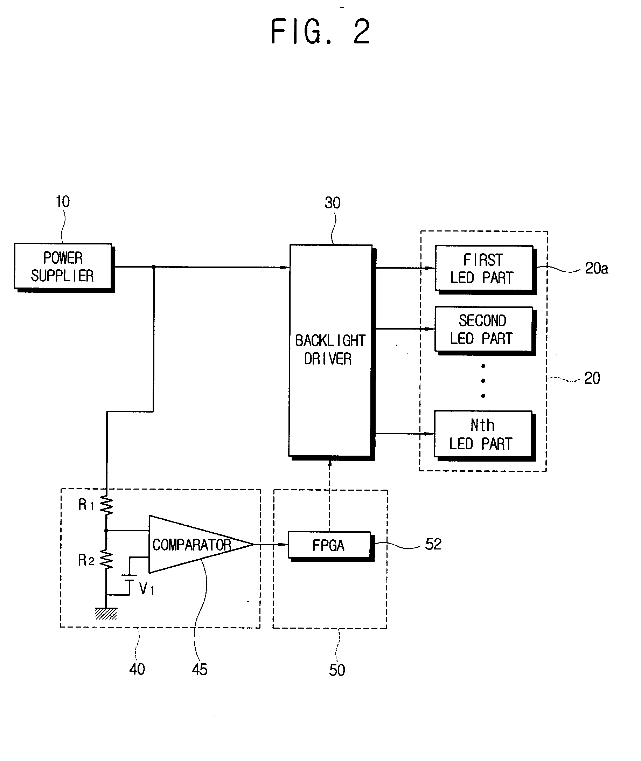

In the display apparatus according to the first embodiment of the present invention, the controller 50" comprises both the FPGA 52 and the microcomputer 55, but is not limited thereto. Alternatively, the controller 50" may comprise only one of the FPGA 52 and the microcomputer 55, as shown in FIG. 2. A second embodiment of the present invention will now be described with reference to FIGS. 2 through 5.

FIG. 2 is a control block diagram of a display apparatus according to a second exemplary embodiment of the present invention. As shown therein, the display apparatus according to the second embodiment of the present invention comprises the LED backlight 20, the backlight driver 30 to control the drive of the LED backlight 20, a power supplier 10 to supply driving power, for example, 160V, to the backlight driver 30, the detector 40 to detect a voltage of the driving power supplied to the backlight driver 30 and determine whether the voltage of the driving power is lower than a predetermined voltage, and a controller 50 to control the backlight driver 30 to disable the drive of the LED backlight 20 if it is determined that the voltage of the driving power is lower than the predetermined voltage based on the detection of the detector 40.

If a disable signal is input from the controller 50, the backlight driver 30 may disable a current applied to the LED backlight 20 to make it substantially "0", thereby disabling the drive of the LED backlight 20. If an enable signal is input from the controller 50, the backlight driver 30 may control the drive of the LED backlight 20 to drive it normally.

The controller 50 comprises the field programmable gate array 52 as a controller to control the backlight driver 30 to disable the drive of the LED backlight 20 by outputting the disable signal to the backlight driver 30 if a high signal is input from the comparator 45. The FPGA 52 may control the backlight driver 30 to enable the drive of the LED backlight 20 by outputting the enable signal to the backlight driver 30 if a low signal is input from the comparator 45 while in a state wherein the drive of the LED backlight 20 is disabled.

If the driving power supplied to the backlight driver 30 is lower than a predetermined allowable value of normal driving power, the backlight driver 30 may be disabled through an operation of the FPGA 52.

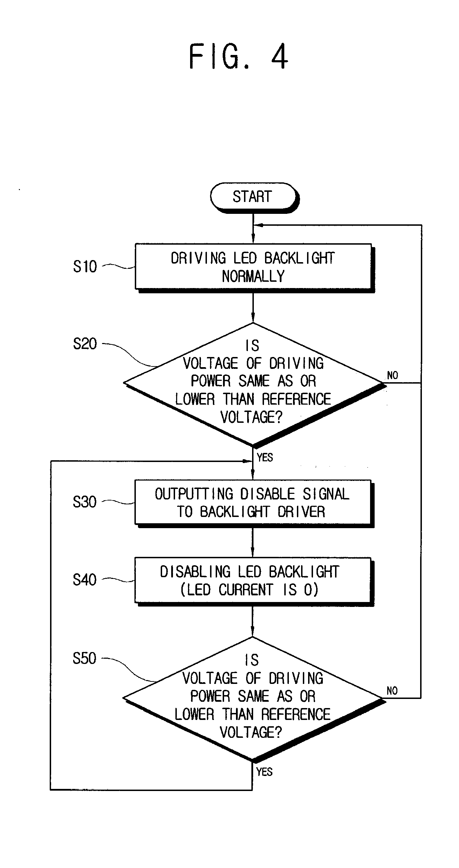

Referring to FIG. 4, a control flowchart of operation the display apparatus according to the second exemplary embodiment of the present invention will now be described. The LED backlight 20 is driven in a normal mode at operation S10. At this time, in operation S20, the comparator 45 determines whether the voltage detected through the resistance division circuit resistors R1 and R2 is lower than the predetermined reference voltage V1, and if so supplies a high signal to the FPGA 52. Otherwise the comparator 45 supplies a low signal. If the high signal is input from the comparator 45, this menas that the voltage from the power supplier 11 has dropped below a threshold value and the FPGA 52 then outputs a disable signal to the backlight driver 30 at operation S30. The backlight driver 30 then controls the current applied to the LED backlight 20 to become substantially "0", thereby disabling the drive of the LED backlight 20 at operation S40. The FPGA 52 continuously determines whether the voltage of the predetermined comparison driving power is lower than the predetermined reference voltage V1, according to the high and low signals input from the comparator 45 at operation S50. Thus, the FPGA 52 outputs the enable signal to the backlight driver 30 and drives the LED backlight 20 normally, returning to the operation S10, if it is determined that the voltage of the predetermined comparison driving power is no longer lower than the reference voltage V1 according to the high and low signals input from the comparator 45 while in a state wherein the drive of the LED backlight 20 is disabled (that is, after operation S40).

The display apparatus according to embodiments of the present invention disables the drive of the LED backlight 20 only if the driving power supplied to the backlight driver 30 is lowered below the predetermined allowable value of the normal driving power instead of turning off the entire power of the display apparatus as done conventionally.

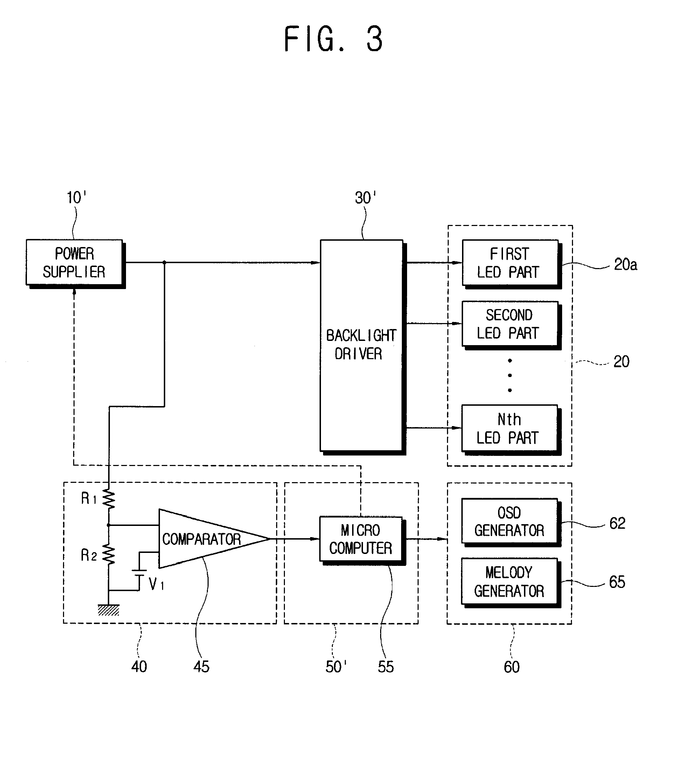

FIG. 3 is a control block diagram of a display apparatus according to a third exemplary embodiment of the present invention. As shown therein, the display apparatus comprises the LED backlight 20, a backlight driver 30' to control the drive of the LED backlight 20, the power supplier 10' to supply driving power, for example, 160V, to the backlight driver 30', the detector 40 to detect a voltage of the driving power supplied to the backlight driver 30' and determine whether the voltage of the driving power is lower than a predetermined voltage, and a controller 50' to control the power supplier 10' to disable the drive of the LED backlight 20 if it is determined that the voltage of the driving power is lower than the predetermined voltage based on the detection of the detector 40.

The backlight driver 30' generates a constant current from the driving power supplied from the power supplier 10', and controls the drive of the LED backlight 20 by using the constant current.

The controller 50' comprises a microcomputer 55 to output a PWM signal to the power supplier 10' to control the power supplier 10' to cut off the driving power supplied to the backlight driver 30' if the high signal is input from the comparator 45 based on the detection of the detector 40, thereby disabling the drive of the LED backlight 20.

Here, the microcomputer 55 outputs the PWM signal to the power supplier 10' to control the power supplier 10' to change a driving mode of the display apparatus from a normal mode to a standby mode, and cuts off the driving power supplied to the backlight driver 30' if the high signal is input from the comparator 45.

If the driving power supplied to the backlight driver 30' is lowered below a predetermined allowable value of the normal driving power, the driving mode of the display apparatus may be changed into the standby mode or the driving power supplied to the backlight driver 30' may be cut off, thereby disabling the drive of the LED backlight 20.

If it is determined that the voltage of the predetermined comparison driving power is lower than the reference voltage V1 for a predetermined number of periods of time, for example, 20ms, for a predetermined number of times, for example, 5 times, based on the detection of the detector 40, the microcomputer 55 may control the power supplier 10' to cut off the driving power supplied to the backlight driver 30' or change the driving mode of the display apparatus into the standby mode to disable the drive of the LED backlight 20.

In this case, the operation of the LED backlight 20 may be disabled only if the driving power is lowered below the predetermined allowable value due to operation changes or errors, and exclude occurrences wherein the driving power is lowered below the allowable value due to temporary malfunctions and normal operation power is quickly supplied again.

The operation of disabling the drive of the LED backlight 20 is not described in the first and second exemplary embodiments in a case where the determination that the voltage of the predetermined comparison driving power is lower than the reference voltage V1, is generated for a predetermined number of periods of time. However, the microcomputer 55 or the FPGA 52 of the first embodiment, or the FPGA 52 of the second embodiment may easily operate to disable the drive of the LED backlight 20 only, if the determination that the voltage of the predetermined comparison driving power is lower than the reference voltage V1, is generated for the predetermined number of periods of time.

The display apparatus according to the third exemplary embodiment of the present invention further comprises the OSD generator 62 to generate an OSD over-temperature message and an OSD normal temperature message, and the melody generator 65 to generate an over-temperature melody and a normal temperature melody.

The microcomputer 55 may control at least one of the OSD generator 62 and the melody generator 65 to inform the user of the over-temperature of an LED backlight 20 if and/or when disabling the drive of the LED backlight 20. Also, the microcomputer 55 may control at least one of the OSD generator 62 and the melody generator 65 to inform the user of a normal temperature of the LED backlight 20 if it is determined that a voltage of predetermined comparison driving power is higher than a reference voltage V1 based on the detection of the detector 40 while in a state wherein the drive of the LED backlight 20 is disabled.

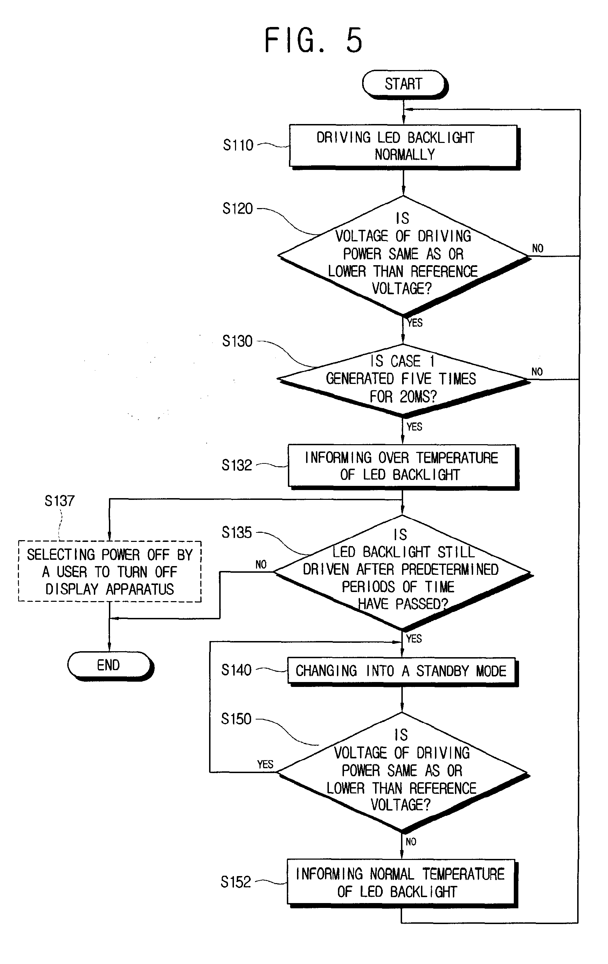

Referring to FIG. 5, a control flowchart of the display apparatus according to the third exemplary embodiment of the present invention will now be described. The display apparatus drives the LED backlight 20 in a normal mode at operation S110. At this time, in operation S120, the microcomputer 55 determines whether the voltage detected by the comparator 45 through the resistance division circuit resistors R1 and R2 is lower than the predetermined reference voltage V1 gives rise to high and low signals. The microcomputer 55 checks if the determination (hereinafter referred to as Case 1) that the voltage of the predetermined comparison driving power is lower than the reference voltage V1, is generated for a predetermined number of periods of time, at operation S130. If Case 1 is generated for the predetermined number of periods of time, the microcomputer 55 controls informer 60 to inform the user of the over-temperature of the LED backlight 20 in operation S132. Then, a user recognizes the over-temperature of the LED backlight 20 through the informer 60 and can select to turn off the display apparatus, thereby cooling off the LED backlight 20 at operation S137.

The microcomputer 55 then determines whether the LED backlight 20 is still driven for a predetermined number of periods of time (2 seconds) after the operation S132, at operation S135. If the user selects the power off, the LED backlight 20 is not driven. If the LED backlight 20 is being driven, the microcomputer 55 controls the power supplier 10' to change the driving mode of the display apparatus into the standby mode at operation S140. If the display apparatus is in the standby mode, the driving power supplied to the backlight driver 30' is cut off. Thus, the drive of the LED backlight is disabled.

The microcomputer 55 continuously determines whether the voltage of the predetermined comparison driving power detected through the resistance division circuit resistors R1 and R2 is lower than the predetermined reference voltage V1 according to the high and low signals input from the comparator 45, at operation S150. If it is determined that the voltage of the predetermined comparison driving power is no longer lower than the reference voltage V1 according to the high and low signal input from the comparator 45 while in a state wherein the drive of the LED backlight 20 is disabled in the standby mode (that is, after operation S140), the microcomputer 55 controls the informer 60 to inform the user of the normal temperature of the LED backlight 20 at operation S152. The microcomputer 55 may control the power supplier 10' to then change the driving mode of the display apparatus into the normal mode, thereby driving the LED backlight 20 normally and returning to the operation S110.

The display apparatus according to embodiments of the present invention may be changed into the standby mode and disable the drive of the LED backlight 20 instead of turning off the entire power to the device as done conventionally if the driving power supplied to the backlight driver 30' is lowered below the predetermined allowable value of the normal driving power. As a user recognizes the over-temperature and normal temperature of the LED backlight 20, a user may not feel confusion as to the cause of power interruption and may take appropriate action.

The described embodiments of the present invention thus provide a display apparatus in which the drive of the LED backlight 20 is disabled to prevent over-current from being generated by the backlight driver 30 if the voltage of driving power supplied by the power supplier 10 to the backlight driver is lower than a predetermined value. This prevents overheating.

Although a number of illustrative embodiments of the present invention have been shown and described herein, it will be appreciated by those skilled in the art that changes may be made in these embodiments without departing from the invention, the scope of which is defined in the appended claims.

## Claims

1. A display apparatus including a light emitting diode (LED) backlight (20), comprising:
a backlight driver (30) to drive the LED backlight;
a power supplier (11) to supply driving power to the backlight driver;
a detector (40) to detect a voltage of the driving power supplied to the backlight driver and determine whether the voltage of the driving power is greater or lower than a predetermined voltage; and
a controller (50) to control at least one of the backlight driver and the power supplier to disable the drive of the LED backlight if it is determined that the voltage of the driving power is lower than the predetermined voltage based on the detection of the detector.

2. The display apparatus according to claim 1, wherein the controller comprises:
a field programmable gate array (FPGA) (52) to control the backlight driver to disable the drive of the LED backlight when it is determined that the voltage of the driving power is lower than the predetermined voltage based on the detection of the detector.

3. The display apparatus according to claim 2, wherein the backlight driver is configured to disable the drive of the LED backlight (20) according to a disable control provided by the FPGA.

4. The display apparatus according to any preceding claim, wherein the controller comprises:
a microcomputer (50) to control the power supplier to cut off the driving power supplied to the backlight driver to disable the drive of the LED backlight if it is determined that the voltage of the driving power is lower than the predetermined voltage based on the detection of the detector.

5. The display apparatus according to claim 4, wherein the microcomputer (50) is configured to control the power supplier to cut off the driving power supplied to the backlight driver to disable the drive of the LED backlight if the determination that the voltage of the driving power is lower than the predetermined voltage, is generated for a predetermined periods of time, for a predetermined number of times based on the detection of the detector.

6. The display apparatus according to claim 4 or 5, wherein the microcomputer (50) is configured to control the power supplier to change a driving mode of the display apparatus into a standby mode to disable the drive of the LED backlight.

7. The display apparatus according to any preceding claim, wherein the detector comprises:
a comparator to detect the voltage of the driving power supplied to the backlight driver, compare the detected voltage with the predetermined reference voltage, and output a high signal to the controller if the voltage of the driving power is lower than the reference voltage.

8. The display apparatus according to any preceding claim, further comprising:
an informer (60) to inform a user of the over-temperature of the LED backlight, wherein the controller is configured to control the informer to inform the user of the over-temperature of the LED backlight if disabling the drive of the LED backlight based on the detection of the detector.

9. The display apparatus according to claim 8, wherein the controller is configured to control the informer to inform the user of a normal temperature of the LED backlight if it is determined that the voltage of the driving power is higher than the predetermined voltage based on the detection of the detector while in a state wherein the drive of the LED backlight is disabled.

10. The display apparatus according to claim 8 or 9, wherein the informer comprises:
at least one of an on screen display (OSD) generator (62) to generate an OSD over-temperature message and an OSD normal temperature message; and
a melody generator (65) to generate an over-temperature melody and a normal temperature melody to inform the user of the over-temperature and normal temperature of the LED backlight.

11. A display apparatus comprising:
a light source operable as a backlight (20);
a constant current backlight driver (30) for the backlight; and
a power supplier (11) to supply power to the driver, **characterised by** control means (50) operable to disable the driver if the voltage of the power supplier (11) drops below a threshold, so as to prevent an over-current that produces overheating.
